# EUROPÄISCHE PATENTSCHRIFT

(11) **EP 1 980 307 B1**
(45) Veröffentlichungstag und Bekanntmachung des Hinweises auf die Patenterteilung: **22.06.2016**
(21) Anmeldenummer: 08160093.4
(22) Anmeldetag: 05.12.2005
(51) Int. Cl.: B01D 35/16, B01D 29/96, F01M 11/03, F16N 39/06

(54) **Flüssigkeitsfilter mit einer Entleerungsvorrichtung**
Liquid filter
Filtre de liquide

(30) Priorität: 06.12.2004 DE 102004058885
(43) Veröffentlichungstag der Anmeldung: 15.10.2008
(62) Teilanmeldung aus: 05111685.3
(73) Patentinhaber: MANN+HUMMEL GmbH, 71638 Ludwigsburg (DE)
(72) Erfinder: Weindorf, Martin, 70806, Kornwestheim (DE); Kolczyk, Markus, 74395, Mundelsheim (DE); Blum, Ralf, 84168, Aham (DE)

(56) Entgegenhaltungen:
- EP-A- 0 839 563
- EP-A- 1 327 471
- EP-A- 1 419 809
- EP-A- 1 479 427
- DE-A1- 19 538 883
- DE-U1- 29 921 543
- US-A1- 2002 020 660
- US-B1- 6 706 181

## Beschreibung

### Technisches Gebiet

Die Erfindung betrifft einen Flüssigkeitsfilter, insbesondere für das Schmieröl einer Brennkraftmaschine, welcher ein topfförmiges Gehäuse mit Schraubdeckel aufweist, wobei im Schraubdeckel ein Ablass für Flüssigkeitsrückstände untergebracht ist, nach der Gattung des Patentanspruches 1. Außerdem betrifft die Erfindung ein Filterelement, welches zum Einbau in den Flüssigkeitsfilter geeignet ist, nach der Gattung des Patentanspruches 6.

### Stand der Technik

Ein derartiger Flüssigkeitsfilter ist z. B. aus der DE 196 44 647 A bekannt. Dieser Filter hat ein topfförmiges Gehäuse, dessen Einbauöffnung für die Filterpatrone nach unten weist und in den nach Einbau der Filterpatrone ein Schraubdeckel eingeschraubt werden kann. Einlass und Auslass für den Filter befinden sich im Gehäusetopf, d. h. im oberen Teil des Filtergehäuses. Dadurch sind das Gehäuse und insbesondere der Schraubdeckel auch außerhalb der Betriebszeit immer mit der zu filternden Flüssigkeit gefüllt. Dies erschwert einen Wechsel der Filterpatrone, da diese Restflüssigkeit beim Aufschrauben des Deckels in die Umwelt gelangen kann. Deswegen ist im Schraubdeckel an seinem geodätisch tiefsten Punkt eine Ablassschraube vorgesehen, welche zunächst gelöst werden kann, um den Flüssigkeitsrest im Schraubdeckel zu entfernen. Hierdurch wird der Wechsel der Filterpatrone wesentlich erleichtert.

Der vorgeschlagene Flüssigkeitsfilter wird insbesondere als Ölfilter im Einsatz von Brennkraftmaschinen verwendet. Hier sind die Platzverhältnisse aufgrund anderer Komponenten im Motorraum häufig sehr beengt. Deswegen ist ein Betätigen der Ablassschraube häufig mit Problemen verbunden. Außerdem muss das aus der Ablassöffnung herauslaufende Öl aufgefangen werden. Auch dieses ist aufgrund der beengten Einbausituation häufig nur unter erschwerten Bedingungen möglich. Da ein Auffangbehälter mit genügendem Volumen nicht unter der Ablassöffnung platziert werden kann.

Die EP 1 419 809 A offenbart ein Ölfiltersystem mit einem Ablassventil, das bei geschlossenem System mit eingebautem Filterelement von einem elastischen Betätigungselement, insbesondere einer Feder, in einer Stellung gehalten wird, in weicher die Ablassöffnung verschlossen ist.

Aufgabe der Erfindung ist es daher, einen Flüssigkeitsfilter mit einem Flüssigkeitsablass im Schraubdeckel zu schaffen, welcher sich auch bei beengten Einbaubedingungen zuverlässig entleeren lässt, Diese Aufgabe wird durch die Merkmale des Patentanspruches 1 gelöst. Außerdem wird gemäß Patentanspruch 6 ein Filterelement beansprucht, welches beim Einbau in einen Flüssigkeitsfilter gemäß Anspruch 1 die Aufgabe zu lösen vermag.

### Offenbarung der Erfindung

Der erfindungsgemäße Flüssigkeitsfilter ist zum Einbau in hängender Position gedacht. Das heißt, dass die durch den Gehäusetopf gebildete und durch den Schraubdeckel zu verschließende Einbauöffnung für die Filterpatrone nach unten weist. Dabei muss die Gehäuseachse nicht senkrecht stehen, es ist auch möglich, das Gehäuse derart auszurichten, dass die Gehäusemittelachse schräg nach unten weist. Der Gehäusetopf muss kein gesondertes Bauteil sein. Es ist auch denkbar, dass dieser durch ein anderes Bauteil, z. B. den Motorblock mitgebildet wird.

Im Schraubdeckel ist ein Ablass für Flüssigkeitsrückstände vorgesehen, wobei im Bereich des Ablasses ein Mittel zum Öffnen und Schließen des Ablasses angeordnet ist. Dieses Mittel verschließt eine vorzugsweise runde Ablauföffnung, die in der Mittelachse des Gehäuses angeordnet ist, über eine Dichtung. Die Dichtung kann z. B. ein O-Ring sein, es ist aber auch möglich, dass das Mittel zum Öffnen und Schließen aufgrund einer entsprechenden Materialwahl als solche Dichtfunktionen übernimmt. Das Mittel ist dabei mit der Endscheibe des Filterelementes verbunden. Das Mittel ist vorzugsweise derart mit der Endscheibe des Filterelementes verbunden, dass dessen Axialspiel bezogen auf die Mittelachse des Gehäuses begrenzt ist. Wird der Schraubdeckel, in dem die runde Ablauföffnung untergebracht ist, gelöst, so bewegt sich dieser relativ zum Mittel zum Öffnen oder Schließen des Ablaufs, dessen axiale Bewegung begrenzt ist. Dadurch wird die Dichtung des Mittels aus der Ablauföffnung herausgezogen und diese automatisch zum Ablauf der Flüssigkeitsrückstände freigegeben. Sobald die Flüssigkeit abgelaufen ist, kann der Schraubdeckel vollständig vom Gehäusetopf abgeschraubt werden, um anschließend das Filterelement zu wechseln.

Der Vorteil dieser erfindungsgemäßen Lösung liegt darin, dass die Ablauföffnung automatisch durch teilweises Aufschrauben des Schraubdeckels geöffnet wird. Daher muss der Verschluss der Ablauföffnung nicht für spezielle Werkzeuge, z. B. einen Schraubenschlüssel, zugänglich sein. Da der Aktionsraum eines Öffnungswerkzeuges für die Ablauföffnung nicht beachtet werden muss, kann das erfindungsgemäße Flüssigkeitsfilter auch in beengten Platzverhältnissen eingebaut werden. Hierdurch ergibt sich eine größere geometrische Gestaltungsfreiheit der Brennkraftmaschine.

Erfindungsgemäß ist im Schraubdeckel ein Ablauf für Flüssigkeitsrückstände vorgesehen, der gemäß einer vorteilhaften Ausgestaltung der Erfindung einen Anschluss für eine Ableitungseinrichtung aufweist, die zum Zweck der Ableitung montiert und nach der Ableitung der Flüssigkeitsrückstände wieder demontiert werden kann. Dies hat den Vorteil, dass im direkten Bereich des Ablaufes lediglich Platz für den Anschluss der Ableitungseinrichtung vorhanden sein muss. Diese kann mit dem Ablauf verbunden werden, wobei anschließend der Ablauf geöffnet wird. Die Ableitungseinrichtung befördert die Flüssigkeit zu einem hierfür vorgesehenen Auffangbehälter. Sobald alle Flüssigkeitsrückstände aus dem Gehäuse entfernt sind, kann die Ableitungsvorrichtung demontiert werden, so dass sie die Öffnung des Schraubdeckels nicht weiter behindert.

Gemäß einer besonderen Ausgestaltung der Erfindung besteht die Ableitungsvorrichtung aus einem Schlauch, der auf einen entsprechenden Schlauchstutzen am Schraubdeckel aufsteckbar ist. Diese Variante stellt eine besonders einfache Möglichkeit dar, die Ableitungseinrichtung zu realisieren. Hierdurch entsteht also kein erhöhter Komponentenaufwand, was der Wirtschaftlichkeit der Lösung zuträglich ist. Entsprechende Ableitungsschläuche sind einfach zu beschaffen und in der Service leistenden Werkstatt verfügbar.

Es ist vorteilhaft, am Gehäusetopf ein Stützrohr lösbar oder unlösbar anzuordnen. Hierbei ist das Filterelement auf das Stützrohr aufschiebbar. Derartige Stützrohre sind in manchen Anwendungsfällen vorgesehen, um das Filterelement gegen die am Filtermedium vorliegenden Druckunterschiede abzustützen. Das Stützrohr kann dabei aus einem Kunststoff oder Metall gefertigt sein, bevorzugt ist es im Spritzgießverfahren hergestellt. Die Verbindung zum Gehäusetopf kann über eine Schraub-, Clips- oder auch Bajonettverbindung im lösbaren Fall oder über Kleben oder Schweißen im unlösbaren Fall erfolgen. Falls das Mittel zum Öffnen oder Schließen des Ablaufes mit einem im Filterelement angeordneten Stützrohr verbunden ist, so kann das Filterelement über das im Element angeordnete Stützrohr mit dem Stützrohr, welches am Gehäuse angeordnet ist, verbunden werden. Dieses kann über eine Clips- oder Schraubverbindung erfolgen.

Das Filterelement weist am axialen Ende in Richtung zum Gehäusetopf eine ringscheibenförmige Endscheibe auf. Die Endscheibe kann dabei aus Kunststoff oder Metall sein und über Schweiß- oder Klebverfahren mit dem Filtermedium verbunden sein. An dieser Endscheibe ist ein ringförmiger, konzentrisch sich axial in Richtung des Gehäusetopfes erstreckender Ringkragen angeordnet. Dabei stellt das axiale Ende des Ringkragens einen axialen Endanschlag des Filterelementes in eingebautem Zustand im Gehäuse dar. Das heißt, dass das axiale Ende des Ringkragens einen Anschlag Im Gehäusetopf findet und dadurch die axiale Position des Filterelementes in eingebautem Zustand festgelegt ist. Der Ringkragen kann dabei einstückig mit der Endscheibe verbunden sein und beispielsweise im Spritzgießprozess mit dieser hergestellt sein oder aber auch nachträglich lösbar oder unlösbar mit der Endscheibe verbunden werden.

Bevorzugt weist hierzu der Gehäusetopf eine plane, durchgehende, bevorzugt kreisringförmige Anschlagfläche zur Aufnahme des axialen Endanschlages der Endscheibe des Filterelementes auf. Die plane, durchgehende Anschlagsfläche korrespondiert dabei mit der Kontur des Ringkragens und kann dabei beispielsweise im Span abhebenden Verfahren im Gehäusetopf hergestellt sein.

Es ist vorteilhaft, wenn das Stützrohr einen ringförmigen, konzentrischen, sich axial in Richtung des Gehäusetopfes erstreckenden Ringkragen aufweist. Das axiale Ende des Ringkragens des mit dem Gehäuse verbundenen Stützrohres liegt hierbei ebenfalls an der oben genannten Anschlagfläche des Filtergehäuses an. Hierbei muss nicht zwangsläufig ein axialer Endanschlag gebildet sein, es kann auch ein minimaler Luftspalt zwischen Ringkragen und Anschlagfläche existieren, es geht darum, dass der Ringkragen sich in etwa bis zur Anschlagfläche erstreckt.

Gemäß einer vorteilhaften Ausgestaltung der Erfindung ist das Filterelement mittels des Ringkragens, weicher an der Endscheibe des Filterelementes angeordnet ist, mit dem Ringkragen des Stützrohres, weiches mit dem Gehäuse verbunden ist, in eingesetztem Zustand des Filterelementes verbunden. Erfindungsgemäß ist diese Verbindung flüssigkeitsdicht ausgeführt, so dass an diesem Punkt eine Trennung zwischen Roh- und Reinseite erfolgt. Die Verbindung zwischen den beiden Ringkragen kann hier beispielsweise über eine entsprechend ausgelegte Clipsverbindung erfolgen, wobei die Abdichtung durch eine entsprechende Verpressung und Materialwahl oder auch über zusätzliche Dichthilfsmittel, wie beispielsweise O-Ringe, erfolgen kann.

Ein erfindungsgemäßes Filterelement für einen oben beschriebenen Flüssigkeitsfilter weist ein hohlzylindrisch aufgebautes Filtermedium und jeweils eine Endscheibe an den axialen Enden des Filtermediums auf. Das Filterelement ist mit dem Gehäuse verbindbar, wobei durch die Verbindung die Position festgelegt und fixiert wird. An der dem Gehäusetopf gegenüberliegenden Seite ist ein Mittel zum Öffnen oder Verschließen des Gehäuseablaufs angeordnet, wobei das Mittel mit dem Filterelement verbunden ist.

Eine der Endscheiben ist scheibenförmig geschlossen ausgebildet und mit einem Mittel zum Öffnen und Verschließen des Ablasses verbunden, und die andere Endscheibe ist ringscheibenförmig ausgebildet und weist einen sich axial vom Filtermedium weg erstreckenden Ringkragen auf. Die Endscheiben können hierbei aus einem Kunststoff, wie beispielsweise Polyamid oder Nitrilkautschuk gebildet sein, es ist jedoch auch möglich, hier Endscheiben aus Metall zu verwenden. Die Endscheiben werden über eine Kleb- oder Schweißverbindung mit dem Filtermedium verbunden. Das Mittel zum Öffnen und Verschließen des Ablasses kann mit der einen Endscheibe über eine Clipsverbindung lösbar verbunden werden. Ebenso verhält es sich mit dem Ringkragen der anderen Endscheibe, auch hier kann dieser einstückig mit der Endscheibe ausgebildet sein oder aber über sämtliche denkbare lösbare oder unlösbare Verbindungsmöglichkeiten mit der Endscheibe verbunden sein.

Erfindungsgemäß weist das Mittel zum Öffnen oder Verschließen des Ablasses ein rohrförmiges Teilstück auf, welches am unteren Ende geöffnet ist. Das Teilstück ragt dabei in die Ablauföffnung hinein, und die Rohrwandung des Teilstückes ist mit Durchbrüchen versehen. Oberhalb der Durchbrüche ist im Bereich der Ablauföffnung ein radiales Dichtmittel am Teilstück angeordnet. In eingebautem Zustand des Filterelementes sind die Durchbrüche von einer Durchführung im Schraubdeckel verdeckt. Durch Aufschrauben des Deckels wandern die Durchbrüche in den Innenraum des Schraubdeckels, wodurch die Restflüssigkeit durch die Durchbrüche in das Auslaufende gelangen kann. Auf diese Weise ist eine Ableitung der Restflüssigkeit möglich.

Zur Handhabung des Filterelementes ist es vorteilhaft, dass die scheibenförmig geschlossene Endscheibe einen größeren Außendurchmesser als das Filtermedium selbst aufweist. Der sich dadurch bildende Überstand ergibt eine gute Möglichkeit, nach Abschrauben des Schraubdeckels das Filterelement an diesem Überstand von dem Stützrohr herunterzuziehen, ohne direkt das Filtermedium, welches stark verölt ist, anzufassen.

Um auch die Betriebssicherheit des Filters zu erhöhen, kann in der scheibenförmigen Endscheibe ein Umgehungsventil vorgesehen werden. Dies wird nur dann notwendig, wenn durch eine zu hohe Partikelverstopfung der notwendige Ölfluss durch das Element nicht mehr gewährleistet ist, so dass wenigstens ein Teil des Öls direkt über das Umgehungsventil von der Roh- in die Reinseite strömen kann. Dazu muss in der scheibenförmigen Endscheibe eine Durchgangsöffnung angeordnet sein, in welcher das Umgehungsventil angeordnet ist.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Weitere Einzelheiten der Erfindung werden in der Zeichnung anhand von schematischer Ausführungsbeispielen beschrieben. Hierbei zeigt: schematischen Ausführungsbeispielen beschrieben. Hierbei zeigt:
- Figur 1: den Längsschnitt durch den erfindungsgemäßen Filter,
- Figur 2: den Auslass gemäß Figur 1 in geöffnetem Zustand,
- Figur 3: eine weitere Variante des Auslasses gemäß Figur 1 mit aufgestecktem Schlauch und in geschlossenem Zustand.

### Ausführungsform(en) der Erfindung

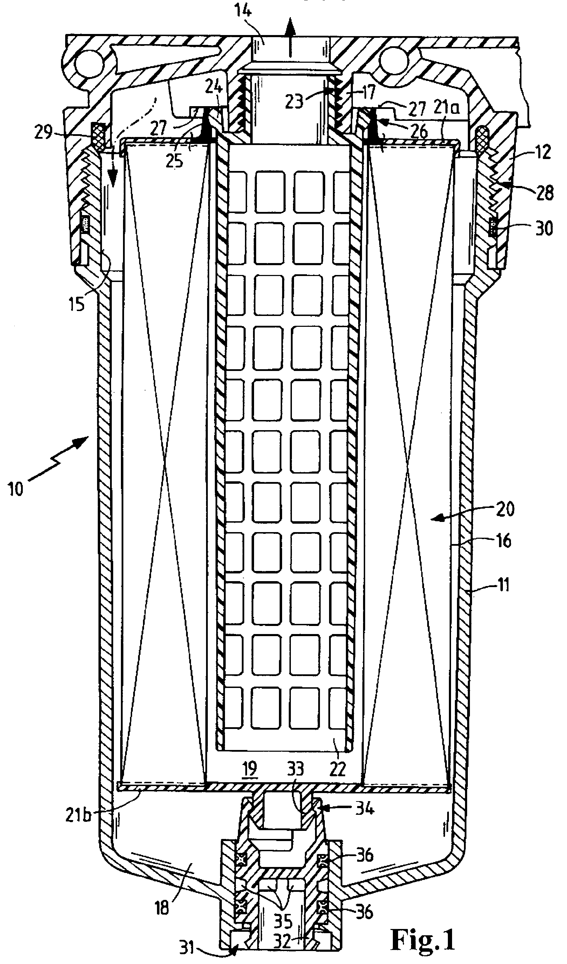

Der in Figur 1 dargestellte Filter besteht aus einem Gehäuse 10, welches einen Schraubdeckel 11 umfasst, welcher in einem Gehäusetopf 12 eingeschraubt ist. Der Gehäusetopf 12 ist als Teil eines nicht dargestellten Motorblockes oder eines separaten Filterkopfes dargestellt. Über diesen Motorblock oder dem separaten Filterkopf sind auch ein Einlass 13 und ein Auslass 14 für das zu filterde Schmieröl der Brennkraftmaschine realisiert. Der Gehäusetopf 12 weist eine nach unten zeigende Einlauföffnung 15 auf, die den Einbau eines Filterelementes 16 gestattet. Diese wird zur Montage auf ein Stützrohr 22 geschoben, wodurch eine Abdichtung zwischen einer Rohseite 18 und einer Reinseite 19 des Filtermediums 20 erreicht wird. Das Filtermedium 20 wird axial durch eine obere Endscheibe 21a und eine untere Endscheibe 21b abgeschlossen. Das Stützrohr 22 ist über eine Gewindeverbindung 23 mit dem Gehäusetopf 12 verbunden. Parallel zur Gewindeverbindung 23 weist das Stützrohr 22 mit einem größeren Durchmesser einen Ringkragen 24 auf. Das Filterelement 16 wird über einen sich axial vom Filterelement weg erstreckenden Ringkragen 25 der Endscheibe 21a über eine dichte Schnappverbindung 26 mit dem Stützrohr verbunden. Die Abdichtung zwischen Roh- und Reinseite erfolgt über die dichte Schnappverbindung 26. Diese kann über eine geeignete Materialwahl und/oder über eine entsprechend starke Verspannung der beiden Teile miteinander erfolgen. Im Gehäusetopf 12 ist im Bereich der Ringkragen 24. 25 ein Axialanschlag 27 für den Ringkragen 25 der Endscheibe 21 a des Filterelementes 16 vorgesehen. Gehäusetopf 12 und Schraubdeckel 11 werden über eine Gewindeverbindung 28 miteinander verschraubt. Der Schraubdeckel 11 kann hierbei aus Kunststoff oder Metall ausgeführt sein, wobei vorzugsweise Kunststoff zu verwenden ist. Zur Abdichtung des Flüssigkeitssystems gegenüber der Umwelt ist eine erste umlaufende Dichtung 29 zwischen Gehäusetopf 12 und Schraubdeckel 11 vorgesehen. Weiterhin ist ein zusätzlicher O-Ring 30 im Bereich der Verbindung zwischen Schraubdeckel 11 und Gehäusetopf 12 vorgesehen, um ein Herauslaufen von Flüssigkeit beim Lösen des Schraubdeckels 11 über einen gewissen axialen Bereich zu verhindern. Im unteren Bereich - also dem geodätisch tiefsten Bereich des Schraubdeckels 11 - ist eine Ablauföffnung 31 angeordnet. In diese ragt ein rohrförmiges Teilstück 32, welches an einem Ringkragen 33 der Endscheibe 21b über eine Clipsverbindung 34 befestigt ist. Das rohrförmige Teilstück 32 weist Durchbrüche 35, die über den Umfang verteilt sind und in das Innere des hohlzylindrischen Teilstückes 32 ragen, auf. Diese Durchbrüche 35 sind von zwei Quadringdichtungen 36 eingerahmt, wobei eine über und eine unter den Durchbrüchen am rohrförmigen Teilstück 32 angeordnet ist. In der dargestellten geschlossenen Form liegen die Durchbrüche 35 im Inneren der Ablauföffnung 31 und werden durch die Quadringdichtungen 36 von der Flüssigkeit im Inneren der Rohseite 18 getrennt.

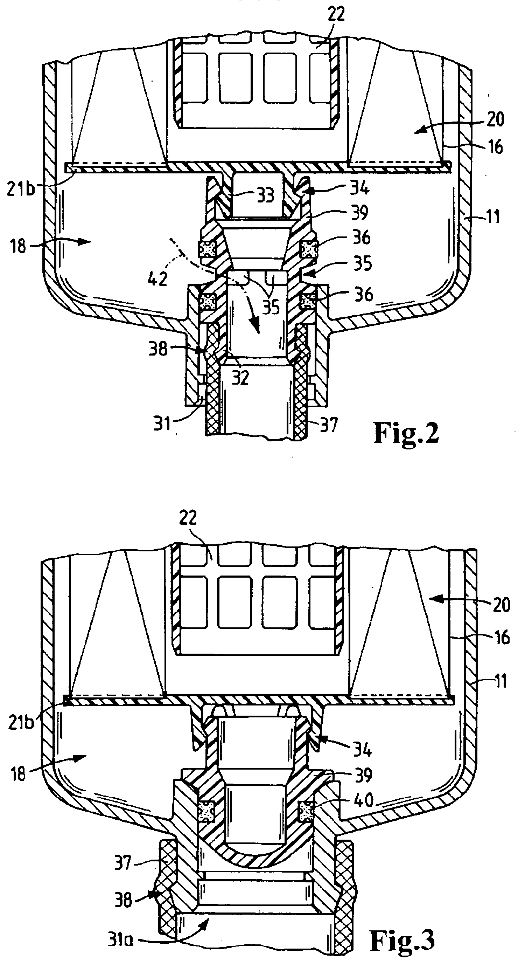

Figur 2 zeigt den Bereich der Ablauföffnung 31 in geöffnetem Zustand. Der vorherigen Figur entsprechende Bauteile sind mit den gleichen Bezugszeichen versehen. Hier ist auf das rohrförmige Teilstück 32 ein Schlauch 37 zur Abfuhr der Flüssigkeit aufgeschoben, welcher durch eine Haltewulst 38 am unteren Bereich des rohrförmigen Teilstücks 32 lösbar fixiert ist. Durch das Losschrauben des Schraubdeckels 11 vom Gehäusetopf 12 verschiebt sich dieser relativ zum durch das Stützrohr 22 gehaltenen Filterelement 16 nach unten, wobei durch den O-Ring 30 ein Auslaufen des Öls im Bereich der Gewindeverbindung 28 verhindert wird. Durch die Relativbewegung in axialer Richtung des Schraubdeckels 11 zum Gehäusetopf 12 werden die Durchbrüche 35 des rohrförmigen Teilstückes 32 freigegeben, wobei dann das im Gehäuse 10 vorhandene Öl in Pfeilrichtung 42 durch die Durchbrüche 35 in das Innere des rohrförmigen Teilstückes 32 fließt und von dort durch den Schlauch 37 einem beispielsweise Auffangbehälter zugeführt werden kann. Dadurch wird erreicht, dass vor der vollständigen Demontage des Schraubdeckels 11 dieser definiert leer laufen kann, wobei das herausfließende Öl aufgefangen werden kann, um daraufhin entsorgt zu werden. Im Anschluss an das Leerlaufen kann der Schraubdeckel 11 ohne Gefahr einer Ölverschmutzung der Umgebung entfernt werden und anschließend das Element 16 vom Stützrohr 22 abgezogen werden, um gegen ein neues Element im Wartungsfall ausgetauscht zu werden.

Figur 3 zeigt eine von den vorliegenden Ansprüchen nicht umfasste Variante des Flüssigkeitsfilters in geschlossenem Zustand im Bereich der Ablauföffnung 31. Den vorherigen Figuren entsprechende Bauteile sind mit den gleichen Bezugszeichen versehen. In diesem Fall weist die Ablauföffnung 31a einen Außenwulst 38 auf, über den der Ablaufschlauch 37 lösbar am Gehäuse 11 gehalten wird. Die Ablauföffnung 31a wird über einen Dichtstempel 39 dichtend verschlossen, wobei dieser Dichtstempel im Bereich seines axialen Endes eine umlaufende Dichtung 40 aufweist. Der Dichtstempel 39 ist - wie in den vorherigen Figuren dargestellt - über eine Clipsverbindung 34 mit der Endscheibe 21 b des Filterelementes 16 verbunden. Bei einem Lösen des Schraubdeckels 11 verschiebt sich dieser wiederum axial und der Dichtstempel 39 gibt nach einer gewissen Axialbewegung des Schraubdeckels 11 die Ablauföffnung 31 frei, so dass das auf der Rohseite 18 vorhandene Öl den Dichtstempel 39 umfließen kann und durch den Schlauch 37 entsorgt werden kann. Diese Ausführungsform ist besonders einfach im Aufbau und daher kostengünstig.

## Patentansprüche

1. Flüssigkeitsfilter, insbesondere für das Schmieröl einer Brennkraftmaschine, welcher ein Gehäuse (10) mit einem Einlass und einem Auslass (14), bestehend aus einem mit einer Einbauöffnung im Wesentlichen nach unten weisenden Gehäusetopf (12) und einem die Einbauöffnung verschließenden Schraubdeckel (11), aufweist, wobei im Gehäuse (10) ein Filterelement (16) angeordnet ist, welches den Einlass dichtend vom Auslass (14) trennt und wobei der Schraubdeckel (11) einen Ablauf (31) für im Gehäuse vorhandene Flüssigkeitsrückstände aufweist, wobei im Bereich des Ablaufes (31) an einem axialen Ende des Filterelementes (16) ein Mittel zum Öffnen und Verschließen des Ablaufes (31) angeordnet ist, wobei das Mittel eine in der Mittelachse des Gehäuses (10) angeordnete, runde Ablauföffnung (31 a) des Ablaufes (31) dichtend verschließt und das Mittel in der Ablassöffnung (31 a) axial beweglich ist, und wobei das Mittel zum Öffnen oder Verschließen des Ablaufes (31) ein rohrförmiges Teilstück (32) aufweist, welches am unteren Ende geöffnet ist, wobei das Teilstück (32) vorgesehen ist, um in eine Ablauföffnung (31a) des Gehäuses (10) hineinzuragen, wobei die Rohrwandung des Teilstückes (32) mit Durchbrüchen (35) versehen ist und oberhalb der Durchbrüche (35)) ein radiales Dichtmittel (30) am Teilstück (32) angeordnet ist, **dadurch gekennzeichnet, dass** das Mittel zum Öffnen und Verschließen des Ablaufes (31) mit einer Endscheibe (21 b) des Filterelementes (16) verbunden ist, wobei ein begrenztes Axialspiel für das Mittel vorgesehen ist, so dass das Mittel über eine begrenzte Distanz in axialer Richtung relativ zum Filterelement (16) bewegbar ist, und wobei die mit dem Mittel zum Öffnen oder Verschließen des Ablaufes (31) verbundene Endscheibe (21 b) scheibenförmig geschlossen ausgebildet ist und die andere Endscheibe (21 a) ringscheibenförmig ausgebildet ist und einen sich axial vom Filtermedium (20) weg erstreckenden Ringkragen (25) aufweist.

2. Flüssigkeitsfilter nach Anspruch 1, **dadurch gekennzeichnet, dass** der Ablauf (31) mit einem Anschluss (38) für eine Ableitungseinrichtung (37) versehen ist, wobei die Ableitungseinrichtung (37) demontierbar ist.

3. Flüssigkeitsfilter nach einem der vorhergehenden Ansprüche, **dadurch gekennzeichnet, dass** im Gehäusetopf (12) ein Stützrohr (22) lösbar oder unlösbar angeordnet ist, wobei das Filterelement (16) auf das Stützrohr (22) aufschiebbar ist.

4. Flüssigkeitsfilter nach Anspruch 3, **dadurch gekennzeichnet, dass** das Stützrohr (22) einen ringförmigen, konzentrischen sich axial in Richtung Gehäusetopf erstreckenden Ringkragen (24) aufweist, derart, dass das axiale Ende des Ringkragens an der Anschlagfläche (27) des Filtergehäuses anliegt.

5. Flüssigkeitsfilter nach Anspruch 4, **dadurch gekennzeichnet, dass** das Filterelement (16) mittels des Ringkragens (25) mit dem Ringkragen (24) des Stützrohres (22) im eingesetzten Zustand des Filterelementes (16) flüssigkeitsdicht verbunden ist.

6. Filterelement (16) zur Verbindung mit einem Gehäuse (10) eines Flüssigkeitsfilters, aufweisend ein hohlzylindrisches Filtermedium (20) und jeweils eine Endscheibe (21 a, 21 b) an den axialen Enden des Filtermediums (20), wobei an einem axialen Ende des Filterelementes (16) ein Mittel zum Öffnen und Verschließen eines Ablaufes (31) des Gehäuses (10) angeordnet ist, und wobei das Mittel zum Öffnen oder Verschließen des Ablaufes (31) ein rohrförmiges Teilstück (32) aufweist, welches am unteren Ende geöffnet ist, wobei das Teilstück (32) vorgesehen ist, um in eine Ablauföffnung (31a) des Gehäuses (10) hineinzuragen, wobei die Rohrwandung des Teilstückes (32) mit Durchbrüchen (35) versehen ist und oberhalb der Durchbrüche (35)) ein radiales Dichtmittel (30) am Teilstück (32) angeordnet ist, **dadurch gekennzeichnet, dass** das Mittel zum Öffnen und Verschließen des Ablaufes (31) mit einer Endscheibe (21 b) des Filterelementes (16) verbunden ist, wobei ein begrenztes Axialspiel für das Mittel vorgesehen ist, so dass das Mittel über eine begrenzte Distanz in axialer Richtung relativ zum Filterelement (16) bewegbar ist, und wobei die mit dem Mittel zum Öffnen oder Verschließen des Ablaufes (31) verbundene Endscheibe (21 b) scheibenförmig geschlossen ausgebildet ist und die andere Endscheibe (21 a) ringscheibenförmig ausgebildet ist und einen sich axial vom Filtermedium (20) weg erstreckenden Ringkragen (25) aufweist.

## Claims

1. Liquid filter, in particular for the lubricating oil of an internal combustion engine which features a housing (10) with an inlet and an outlet (14), consisting of a housing pot (12) pointing in particular downward with a mounting opening and a screw cap (11) closing the mounting opening, wherein a filter element (16) is disposed in the housing (10), which sealingly separates the inlet from the outlet (14) and wherein the screw cap (11) features a discharge (31) for liquid residues in the housing, wherein in the area of the discharge (31) a means for opening and closing the discharge (31) is disposed at an axial end of the filter element (16), wherein the means sealingly closes a round discharge opening (31 a) of the discharge (31) disposed in the central axis of the housing (10) and the means is axially movable in the discharge opening (31 a) and wherein the means for opening or closing the discharge (31) features a tubular segment (32) which is open at the lower end, wherein the segment (32) is provided for protruding into a discharge opening (31 a) of the housing (10), wherein the tube wall of the segment (32) is provided with breakthroughs (35) and a radial sealant (30) is disposed at the segment (32) above the breakthroughs (35), **characterized in that** the means for opening and closing the discharge (31) is connected with an end plate (21 b) of the filter element (16), wherein a limited axial play is provided for the means so that the means is movable across a limited distance in axial direction relative to the filter element (16), and wherein the end plate (21 b) connected with the means for opening or closing the discharge (31) has a closed disk-shaped design and the other end plate (21 a) has an annular disk-shaped design and features an annular collar (25) extending axially away from the filter medium (20).

2. Liquid filter according to claim 1, **characterized in that** the discharge (31) is provided with a connection (38) for a discharge means (37), wherein the discharge means (37) can be removed.

3. Liquid filter according to one of the above claims, **characterized in that** a support tube (22) is disposed detachably or undetachably in the housing pot (12), wherein the filter element (16) can be pushed onto the support tube (22).

4. Liquid filter according to claim 3, **characterized in that** the support tube (22) features an annular, concentric collar (24) extending axially in the direction of the housing pot in such a way that the axial end of the annular collar contacts the stop surface (27) of the filter housing.

5. Liquid filter according to claim 4, **characterized in that** the filter element (16) is connected liquid-tight by means of the annular collar (25) with the annular collar (24) of the support tube (22) when the filter element (16) is inserted.

6. Filter element (16) for connecting with a housing (10) of a liquid filter, featuring a hollow-cylindrical filter medium (20) and an end plate (21 a, 21 b) each at the axial ends of the filter medium (20), wherein a means for opening and closing a discharge (31) of the housing (10) is disposed at an axial end of the filter element (16), and wherein the means for opening or closing the discharge (31) features a tubular segment (32) which is open at the lower end, wherein the segment (32) is provided for protruding into a discharge opening (31 a) of the housing (10), wherein the tube wall of the segment (32) is provided with breakthroughs (35) and a radial sealant (30) is disposed at the segment (32) above the breakthroughs (35), **characterized in that** the means for opening and closing the discharge (31) is connected with an end plate (21 b) of the filter element (16), wherein a limited axial play is provided for the means so that the means is movable across a limited distance in axial direction relative to the filter element (16), and wherein the end plate (21 b) connected with the means for opening or closing the discharge (31) has a closed disk-shaped design and the other end plate (21 a) has an annular disk-shaped design and features an annular collar (25) extending axially away from the filter medium (20).

## Revendications

1. Filtre à liquide, en particulier pour l'huile de lubrification d'un moteur à combustion interne, qui présente un boîtier (10) avec une entrée et une sortie (14), constitué d'un pot de boîtier (12) tourné pour l'essentiel vers le bas avec une ouverture de montage et d'un couvercle vissé (11) fermant l'ouverture de montage, un élément filtrant (16) étant placé dans le boîtier (10), cet élément séparant hermétiquement l'entrée de la sortie (14) et le couvercle vissé (11) présentant une évacuation (31) pour les résidus de liquide présents dans le boîtier, un élément étant placé dans la zone de l'évacuation (31), à une extrémité axiale de l'élément filtrant (16), pour ouvrir et fermer l'évacuation (31), l'élément obturant hermétiquement une ouverture d'évacuation (31 a) ronde de l'évacuation (31) située sur l'axe médian du boîtier (10) et l'élément étant mobile axialement dans l'ouverture d'évacuation (31 a), et l'élément d'ouverture et de fermeture de l'évacuation (31) présentant un élément partiel tubulaire (32) ouvert à l'extrémité inférieure, l'élément partiel (32) étant destiné à pénétrer dans une ouverture d'évacuation (31 a) du boîtier (10), la paroi tubulaire de l'élément partiel (32) étant pourvue de passages (35) et un produit d'étanchéité (30) radial étant disposé sur l'élément partiel (32) au-dessus des passages (35), **caractérisé en ce que** l'élément d'ouverture et de fermeture de l'évacuation (31) est relié à un disque d'extrémité (21 b) de l'élément filtrant (16), un jeu axial limité étant prévu pour l'élément, de sorte que l'élément puisse être déplacé en sens axial, sur une distance limitée, par rapport à l'élément filtrant (16), et un disque d'extrémité (21 b) relié à l'élément d'ouverture et de fermeture de l'évacuation (31) étant exécuté sous forme de disque fermé et l'autre disque d'extrémité (21 a) étant exécuté sous forme de disque annulaire et présentant une collerette annulaire (25) s'écartant axialement du milieu filtrant (20).

2. Filtre à liquide selon la revendication 1, **caractérisé en ce que** l'évacuation (31) est munie d'un raccord (38) pour un dispositif d'évacuation (37), le dispositif d'évacuation (37) étant démontable.

3. Filtre à liquide selon l'une des revendications précédentes, **caractérisé en ce qu**'un tube de support (22) amovible ou inamovible est placé dans le pot de boîtier (12), l'élément filtrant (16) pouvant être glissé sur le tube de support (22).

4. Filtre à liquide selon la revendication 3, **caractérisé en ce que** le tube de support (22) présente une collerette annulaire (24) concentrique s'étendant axialement en direction du pot de boîtier, de telle manière que l'extrémité axiale de la collerette annulaire s'appuie contre la surface de butée (27) du boîtier de filtre.

5. Filtre à liquide selon la revendication 4, **caractérisé en ce que** l'élément filtrant (16) est relié d'une manière hermétique au fluide, au moyen de la collerette annulaire (25), à la collerette annulaire (24) du tube de support (22) lorsque l'élément filtrant (16) est monté.

6. Élément filtrant (16) à assembler avec un boîtier (10) d'un filtre à liquide, présentant un milieu filtrant (20) en forme de cylindre creux et respectivement un disque d'extrémité (21 a, 21 b) aux extrémités axiales du milieu filtrant (20), un élément destiné à ouvrir ou à fermer une évacuation (31) du boîtier (10) étant disposé à une extrémité axiale de l'élément filtrant (16) et l'élément d'ouverture et de fermeture de l'évacuation (31) présentant un élément partiel tubulaire (32) ouvert à l'extrémité inférieure, l'élément partiel (32) étant destiné à pénétrer dans une ouverture d'évacuation (31 a) du boîtier (10), la paroi tubulaire de l'élément partiel (32) étant pourvue de passages (35) et un produit d'étanchéité (30) radial étant disposé sur l'élément partiel (32) au-dessus des passages (35), **caractérisé en ce que** l'élément d'ouverture et de fermeture de l'évacuation (31) est relié à un disque d'extrémité (21 b) de l'élément filtrant (16), un jeu axial limité étant prévu pour l'élément, de sorte que l'élément puisse être déplacé en sens axial, sur une distance limitée, par rapport à l'élément filtrant (16), et le disque d'extrémité (21 b) relié à l'élément d'ouverture et de fermeture de l'évacuation (31) étant exécuté sous forme de disque fermé et l'autre disque d'extrémité (21 a) étant exécuté sous forme de disque annulaire et présentant une collerette annulaire (25) s'écartant axialement du milieu filtrant (20).
